# EUROPEAN PATENT SPECIFICATION

(11) **EP 3 553 333 B1**
(45) Date of publication and mention of the grant of the patent: **02.06.2021**
(21) Application number: 19168182.4
(22) Date of filing: 09.04.2019
(51) Int. Cl.: F16C 17/02, F16C 17/04

(54) **AIR BEARING WITH SURFACE LAYER**
LUFTLAGER MIT OBERFLÄCHENSCHICHT
PALIER À AIR AVEC COUCHE DE SURFACE

(30) Priority: 13.04.2018 US 201815952730
(43) Date of publication of application: 16.10.2019
(73) Proprietor: Hamilton Sundstrand Corporation, Charlotte, NC 28217-4578 (US)
(72) Inventor: POTEET, Steven, Ashland, MA 01721 (US); SMITH, Blair, South Windsor, CT 06074 (US); RANKIN, Kevin M., Windsor, CT 06095 (US); FISKE, William R., Springfield, MA 01118 (US)
(74) Representative: Dehns

(56) References cited:
- EP-A2- 1 754 860
- US-A1- 2007 003 693

## Description

### BACKGROUND

This disclosure relates generally to air bearings, and more specifically, to air bearings for operation at higher temperatures.

Air bearing assemblies require airfoils to provide lubrication, lowering torque, to generate an air film for the bearing to operate. Current airfoil coatings use polymeric coatings, such as Teflon and particle-filled polyimides, and are limited by their operating temperatures and are expensive to manufacture. Lower temperature thresholds require excess bleed air to operate, lowering efficiency, while the application of the coatings requires extensive labor. EP 1754860 A2 describes a variable stator vane bushing assembly for use in a compressor section of a turbine engine. US 2007/0003693 A1 describes a coating material having heat and abrasion resistance.

### SUMMARY

An example embodiment of an air bearing assembly includes at least a first member and a shaft with a flange configured to rotate with respect to the first member. The first stationary member has a coating on at least one surface facing at least one of the shaft and the flange. The coating includes tungsten carbide, a nonpolymeric self-lubricating coating, or a combination thereof, wherein the self-lubricating coating further comprises diamond-like carbon (DLC).

An example embodiment of a foil bearing for an air bearing assembly includes a plurality of convex foils arranged generally about a rotational axis, the foil bearing having a first side, a second opposing side, and an opening centered therethrough. A coating is disposed on the plurality of foils on at least one of the first side and the second side. The coating includes tungsten carbide, a nonpolymeric self-lubricating coating, or a combination thereof, wherein the self-lubricating coating further comprises diamond-like carbon (DLC).

An example embodiment of a method of making a foil bearing for an air bearing assembly includes arranging a plurality of convex foils generally about a rotational axis to form a foil bearing, the foil bearing having a first side, a second opposing side, and an opening centered therethrough, about the rotational axis. A coating is applied which includes tungsten carbide, a nonpolymeric self-lubricating coating, or a combination thereof, wherein the self-lubricating coating further comprises diamond-like carbon (DLC), to at least one of the first side and the second side of the foil bearing. The coating is applied by one of plasma spraying, chemical vapor deposition, and physical vapor deposition.

### BRIEF DESCRIPTION OF THE DRAWINGS

Figure 1A schematically shows an air bearing assembly with a journal and a foil bearing.
Figure 1B is an exploded view of the example air bearing assembly in Figure 1A.
Figure 2 shows an isometric view of the foil bearings interacting in the air bearing assembly of Figures 1A and 1B.
Figure 3 shows an example foil bearing for an air bearing assembly.
Figure 4 shows a cutaway view of the foil bearing of Figure 3.

### DETAILED DESCRIPTION

Vapor deposition of hard, self-lubricating materials can provide the lubricity to create an air film with minimal torque. The entire foil bearing could be coated which would prevent wear and lower friction. In addition, smooth surfaces resulting from CVD/PVD would not need to be post-coat machined, lowering costs substantially. Coating materials are self-lubricating, and the lubricious polymeric matrix required for other coatings, such as fluorinated coatings, can be eliminated which leads to lower total manufacturing cost and ability to operate at higher temperatures.

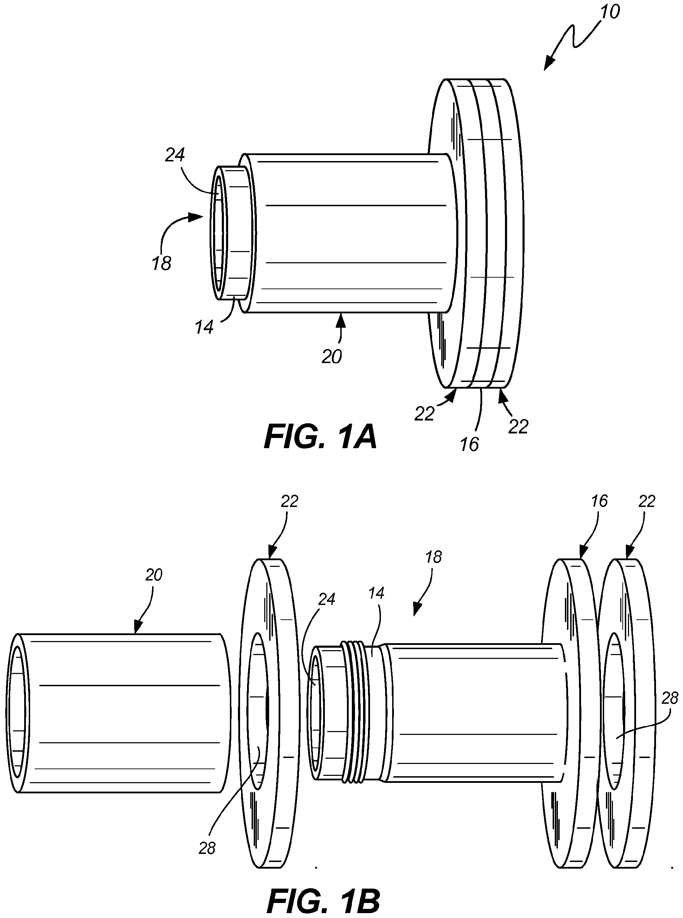

Figures 1A and 1B show an embodiment of air bearing assembly 10, a non-limiting example of which can be installed in a gas turbine engine (not shown). Air bearing assembly 10 includes at least a first stationary member, with shaft 14 and flange 16 configured to rotate with respect to at least the first stationary member, which can include, for example, journal 20 or foil bearing(s) 22. In this example, journal 20 is arranged on shaft 14, and one or more foil bearings 22, which may be spring-loaded, are disposed adjacent flange 16. For simplicity and clarity only, FIGS. 1A and 1B show foil bearings 22 as basic disc shapes with an opening through the center of each, aligned with a rotational axis of the air bearing assembly 10. Additional details of at least one embodiment of foil bearing 22 are shown and described subsequently.

When air bearing unit 18 (specifically shaft 14 and flange 16) is in normal operation, rotating around its design operating speed, rotation relative to stationary elements 20, 22 causes a thin, high-pressure film of air to form therearound, separating air bearing unit 18 from journal 20 and foil bearings 22. This allows air bearing unit 18 to rotate in a near frictionless manner. In some examples, air bearing unit 18 is made of steel.

Shaft 14 includes opening 24, which is configured to receive a drive or other power shaft (not shown). For example, the omitted drive shaft can be connected to a component of a gas turbine engine or air cycle machine (ACM).

During times when air bearing unit 18 is not rotating at its intended operating speed, for example during spin-up or spin-down of the engine or ACM, shaft 14 and flange 16 frequently contact journal 20 and/or foil bearings 22, and wear can occur on the surfaces in frictional contact. During spin-up, air bearing unit 18 rotates with increasing speed until it reaches the normal operating speed, while during spin-down, the air bearing unit 18 decreases rotational speed from to a lower speed or stationary position.

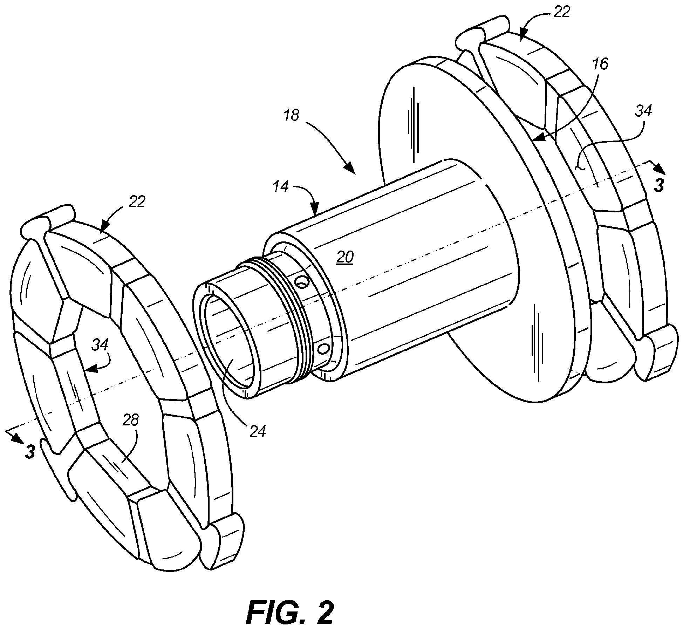

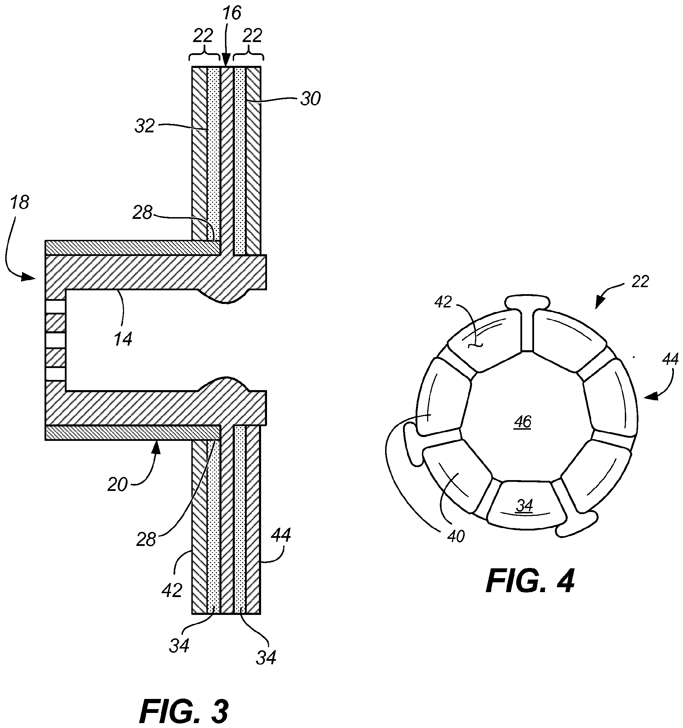

Thus in Figure 2 and 3, one or more stationary members, such as journal 20 and/or foil bearings 22, has a coating 34 on one or more respective surface(s) 28, 30, 32 each facing shaft 14 and/or flange 16. Coating 34 is a hard coating that can withstand the operational environment of the air bearing assembly 10 (which includes high temperatures and/or pressures) and withstand wear during spin-up or spin-down. Coating 34, which may vary in composition and/or thickness among each surface 28, 30, 32, can include tungsten carbide, a nonpolymeric self-lubricating coating, or a combination thereof, wherein the self-lubricating coating further comprises diamond-like carbon (DLC). Certain embodiments of the coating can withstand an operating temperature above 550° F (about 290° C), and in certain of those embodiments, the coating can withstand an operating temperature above 750° F (about 400° C). The coating can range from about 0.00004 inch (1 micron) to 0.002 inch (50 microns) thick.

As referenced in Figures 1A and 1B, a second stationary member can be disposed on a side of flange 16 opposite the first stationary member (journal 20 or foil bearing 22). The second stationary member can be a second foil bearing 22 which optionally has coating 34 on surface 32 facing flange 16, the coating comprising tungsten carbide, a nonpolymeric self-lubricating coating, or a combination thereof, wherein the self-lubricating coating further comprises diamond-like carbon (DLC).

Figure 4 shows foil bearing 22 formed from a plurality of circumferentially arranged foils 40. Foil bearing 22 has first side 42, second opposing side 44, and opening 46 centered therethrough for receiving shaft 14 of air bearing unit 18 (shown in Figures 1A-2). Coating 34 is disposed on at least one surface including at least first side 42 or second side 44. One or more individual foils 40 may be convex to facilitate formation of the air film.

In certain embodiments, coating 34 includes tungsten carbide, a nonpolymeric self-lubricating coating, or a combination thereof, wherein the self-lubricating coating further comprises diamond-like carbon (DLC). In a particular example, coating 34 is self-lubricating. As mentioned regarding Figures 1A and 1B, lubrication facilitates the low-torque rotation of air bearing unit 18 with respect to stationary element(s) such as journal 20 and foil bearings 22 during spin-up and spin-down, prior to the formation of the air film at an intersection thereof. For instance, one or both foil bearings 22 require lubrication at one or more of surfaces including at least first side 42 or second side 44 of foil bearing(s) 22. Preferably, both foil bearings 22 are arranged with a coated surface facing flange 16 (shown in Figures 1A-2).

Self-lubricating coatings eliminate the need for separate lubricants or fluorinated polymer coatings which act as lubricants. Fluorinated polymer coatings in particular cannot withstand high temperatures, limiting suitable operating environments. Therefore, self-lubricating coatings provide not only cost savings and a reduction in manufacturing complexity for foil bearings 22, but also allow foil bearings 22 (and in turn an air bearing assembly) to be used in a wider range of applications. In a particular example, not part of the invention, the self-lubricating coating is selected from a group consisting of: WS₂, WSi₂, AgO, Ag, BN (amorphous or hexagonal), MoS₂, and combinations thereof.

The self-lubricating coatings 34 are free of hexavalent chrome or other carcinogenic compounds and precursors. One example is a diamond-like carbon ("DLC") coating. One example, not part of the invention, DLC coating includes silicon oxide and/or silver, and is applied by PVD. The DLC coating according to the present invention includes tungsten (tungsten carbide carbon, or WCC, or WC/C, or Tungsten-DLC), and is applied by a type of PVD known as plasma assisted physical vapor deposition (PAPVD). The Tungsten-DLC coating has a thickness of about 5 microns (0.0002 inches) or less.

Another example, not part of the invention, chromium-free self-lubricating coating is a boron / aluminum / magnesium ("BAM")-based (formally AlMgB₁₄, but sometimes closer to Al_{0.75}Mg_{0.75}B₁₄). This coating can be applied by CVD, PVD, or aplasma spray process. BAM-based coatings can include dopants such as TiB₂ in some examples, or ceramic dopants in other examples.

In another example, coating 34 is a tungsten-carbide-based coating. The tungsten-carbide-based coating is applied by CVD. The tungsten-carbide-based coating can withstand temperatures up to about 750° F (about 400° C), and provides a more abrasion- and corrosion-resistant surface than a predominantly chromium-based coating. While free from chromium, however, the tungsten-carbide-based coating is not self-lubricating. Like most suitable coatings 34 described herein, the tungsten-carbide-based coating is free from hexavalent chromium.

### Discussion of Possible Embodiments

The following are non-exclusive descriptions of possible embodiments of the present invention.

An example embodiment of an air bearing assembly includes at least a first member and a shaft with a flange configured to rotate with respect to the first stationary member. The first member has a coating on at least one stationary surface facing at least one of the shaft and the flange. The coating includes tungsten carbide, a nonpolymeric self-lubricating coating, or a combination thereof, wherein the self-lubricating coating further comprises diamond-like carbon (DLC).

A further embodiment of any of the foregoing air bearing assemblies, further comprising: a second stationary member disposed on a side of the flange opposite the first stationary member, wherein the second stationary member has a coating on a surface facing the flange, the coating comprising tungsten carbide, a nonpolymeric self-lubricating coating, or a combination thereof, wherein the self-lubricating coating further comprises diamond-like carbon (DLC).

An example embodiment of a foil bearing for an air bearing assembly includes a plurality of convex foils arranged generally about a rotational axis, the foil bearing having a first side, a second opposing side, and an opening centered therethrough. A coating is disposed on the plurality of foils on at least one of the first side and the second side. The coating includes tungsten carbide, a nonpolymeric self-lubricating coating, or a combination thereof, wherein the self-lubricating coating further comprises diamond-like carbon (DLC).

A method according to an exemplary embodiment of this disclosure includes arranging a plurality of convex foils generally about a rotational axis to form a foil bearing, the foil bearing having a first side, a second opposing side, and an opening centered therethrough, about the rotational axis; and applying a coating comprising tungsten carbide, a nonpolymeric self-lubricating coating, or a combination thereof, wherein the self-lubricating coating further comprises diamond-like carbon (DLC), to at least one of the first face and the second face by one of plasma spraying, chemical vapor deposition, and physical vapor deposition.

A further example (not part of the invention) of the foregoing method, wherein the self-lubricating coating is selected from a group consisting of: WS₂, WSi₂, AgO, Ag, BN, MoS₂, and combinations thereof.

A further embodiment of any of the foregoing methods, wherein the coating is greater than about 0.00004 inch (1 micron) thick and less than 0.002 inch (50 microns) thick.

A further embodiment of any of the foregoing methods, wherein the coating is free of fluorinated compounds.

While the invention has been described with reference to an exemplary embodiment(s), it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiment(s) disclosed, but that the invention will include all embodiments falling within the scope of the appended claims.

## Claims

1. An air bearing assembly (10), comprising:
a first member; and
a shaft (14) with a flange (16) configured to rotate with respect to the first member;
wherein the first member has a coating on at least one first surface facing at least one second surface of the shaft (14) and the flange (16), the coating comprising a nonpolymeric self-lubricating coating, or a combination of said nonpolymeric self-lubricating coating with tungsten carbide, **characterized in that** the self-lubricating coating comprises diamond-like carbon (DLC).

2. The air bearing assembly of claim 1, wherein the first member is one of a stationary journal and a stationary foil bearing.

3. The air bearing assembly of claim 1 or 2, wherein the coating can withstand an operating temperature above 550° F (about 288° C).

4. The air bearing assembly of claim 1 or 2,
wherein the coating can withstand an operating temperature above 750° F (about 400° C).

5. The air bearing assembly of any preceding claim, wherein the coating is greater than about 0.00004 inch (1 micron) thick.

6. The air bearing assembly of claim 5 wherein the coating is less than 0.002 inch (50 microns) thick.

7. The air bearing assembly of any preceding claim, wherein the coating is free of fluorinated compounds.

8. The air bearing assembly of any preceding claim, further comprising:
a second member disposed on a side of the flange opposite the first stationary member, wherein the second member has a coating on a surface facing the flange, the coating comprising a nonpolymeric self-lubricating coating,

9. A foil bearing (22) for an air bearing assembly (10), the foil bearing comprising:
a plurality of convex foils (40) arranged generally about a rotational axis, the foil bearing having a first side (42), a second opposing side (44), and an opening (46) centered therethrough; and
a coating on at least one surface including at least the first side (42) or the second side (44), the coating comprising a nonpolymeric self-lubricating coating, or a combination of said nonpolymeric self-lubricating coating with tungsten carbide, **characterized in that** the self-lubricating coating comprises diamond-like carbon (DLC).

10. The foil bearing of claim 9, wherein the coating can withstand an operating temperature above 550° F (about 288° C).

11. The foil bearing of claim 9,
wherein the coating can withstand an operating temperature above 750° F (about 400° C).

12. The foil bearing of claim 9, 10 or 11, wherein the coating is free of fluorinated compounds.

13. A method of making a foil bearing (22) for an air bearing assembly (10), comprising:
arranging a plurality of convex foils (40) generally about a rotational axis to form a foil bearing, the foil bearing (22) having a first side (42), a second opposing side (44), and an opening (46) centered therethrough, about the rotational axis; and
applying a coating comprising a nonpolymeric self-lubricating coating, or a combination of said nonpolzmeric self-lubricating coating and tungsten carbide to at least one of the first face and the second face by one of plasma spraying, chemical vapor deposition, and physical vapor deposition, and **characterized in that** the self-lubricating coating comprises diamond-like carbon (DLC).

14. The method of claim 13, wherein the coating is greater than about 0.00004 inch (1 micron) thick and less than 0.002 inch (50 microns) thick.

15. The method of claim 13 or 14, wherein the coating is free of fluorinated compounds.

## Patentansprüche

1. Luftlageranordnung (10), umfassend:
ein erstes Element; und
eine Welle (14) mit einem Flansch (16), die dazu konfiguriert ist, sich bezogen auf das erste Element zu drehen;
wobei das erste Element eine Beschichtung auf mindestens einer ersten Oberfläche aufweist, die mindestens einer zweiten Oberfläche der Welle (14) und dem Flansch (16) zugewandt ist, wobei die Beschichtung eine nichtpolymere selbstschmierende Beschichtung oder eine Kombination der nichtpolymeren selbstschmierenden Beschichtung mit Wolframkarbid umfasst, **dadurch gekennzeichnet, dass** die selbstschmierende Beschichtung diamantartigen Kohlenstoff (DLC) umfasst.

2. Luftlageranordnung nach Anspruch 1, wobei das erste Element eines ist von einem stationären Lagerzapfen und einem stationären Folienlager ist.

3. Luftlageranordnung nach Anspruch 1 oder 2, wobei die Beschichtung einer Betriebstemperatur über 550 °F (etwa 288 °C) standhalten kann.

4. Luftlageranordnung nach Anspruch 1 oder 2,
wobei die Beschichtung einer Betriebstemperatur über 750 °F (etwa 400 °C) standhalten kann.

5. Luftlageranordnung nach einem der vorstehenden Ansprüche, wobei die Beschichtung mehr als 0,00004 Zoll (1 Mikrometer) dick ist.

6. Luftlageranordnung nach Anspruch 5, wobei die Beschichtung weniger als 0,002 Zoll (50 Mikrometer) dick ist.

7. Luftlageranordnung nach einem der vorstehenden Ansprüche, wobei die Beschichtung frei von fluorierten Verbindungen ist.

8. Luftlageranordnung nach einem der vorstehenden Ansprüche, ferner umfassend:
ein zweites Element, das an einer Seite des Flansches gegenüber dem ersten stationären Element angeordnet ist, wobei das zweite Element eine Beschichtung auf einer Oberfläche aufweist, die dem Flansch zugewandt ist, wobei die Beschichtung eine nichtpolymerische selbstschmierende Beschichtung ist.

9. Folienlager (22) für eine Luftlageranordnung (10), wobei das Folienlager Folgendes umfasst:
eine Vielzahl von konvexen Folien (40), die im Allgemeinen um eine Drehachse angeordnet sind, wobei das Folienlager eine erste Seite (42), eine zweite gegenüberliegende Seite (44) und eine Öffnung (46) mittig dadurch aufweist; und
eine Beschichtung auf mindestens einer Oberfläche, die mindestens die erste Seite (42) oder die zweite Seite (44) beinhaltet, wobei die Beschichtung eine nichtpolymere selbstschmierende Beschichtung oder eine Kombination der nichtpolymeren selbstschmierenden Beschichtung mit Wolframkarbid umfasst, **dadurch gekennzeichnet, dass** die selbstschmierende Beschichtung diamantartigen Kohlenstoff (DLC) umfasst.

10. Folienlager nach Anspruch 9, wobei die Beschichtung einer Betriebstemperatur über 550 °F (etwa 288 °C) standhalten kann.

11. Folienlager nach Anspruch 9,
wobei die Beschichtung einer Betriebstemperatur über 750 °F (etwa 400 °C) standhalten kann.

12. Folienlager nach Anspruch 9, 10 oder 11, wobei die Beschichtung frei von fluorierten Verbindungen ist.

13. Verfahren zum Herstellen eines Folienlagers (22) für eine Luftlageranordnung (10), umfassend:
Anordnen einer Vielzahl von konvexen Folien (40) im Allgemeinen um eine Drehachse, um ein Folienlager um die Drehachse zu bilden, wobei das Folienlager (22) eine erste Seite (42), eine zweite gegenüberliegende Seite (44) und eine Öffnung (46) mittig dadurch aufweist; und
Aufbringen einer Beschichtung, die eine nichtpolymere selbstschmierende Beschichtung oder eine Kombination der nichtpolymeren selbstschmierenden Beschichtung und Wolframkarbid umfasst, auf mindestens eine von der ersten Fläche und der zweiten Fläche durch eines von Plasmaspritzen, chemischer Gasphasenabscheidung und physikalischer Gasphasenabscheidung, und **dadurch gekennzeichnet, dass** die selbstschmierende Beschichtung einen diamantartigen Kohlenstoff (DLC) umfasst.

14. Verfahren nach Anspruch 13, wobei die Beschichtung mehr als 0,00004 Zoll (1 Mikrometer) dick ist und weniger als 0,002 Zoll (50 Mikrometer) dick ist.

15. Verfahren nach Anspruch 13 oder 14, wobei die Beschichtung frei von fluorierten Verbindungen ist.

## Revendications

1. Ensemble palier à air (10), comprenant :
un premier élément ; et
un arbre (14) avec une bride (16) configurée pour tourner par rapport au premier élément ;
dans lequel le premier élément a un revêtement sur au moins une première surface faisant face à au moins une seconde surface de l'arbre (14) et de la bride (16), le revêtement comprenant un revêtement auto-lubrifiant non polymère, ou une combinaison dudit revêtement auto-lubrifiant non polymère avec du carbure de tungstène, **caractérisé en ce que** le revêtement auto-lubrifiant comprend du carbone de type diamant (DLC).

2. Ensemble palier à air selon la revendication 1, dans lequel le premier élément est l'un parmi un tourillon fixe et un palier à feuille fixe.

3. Ensemble palier à air selon la revendication 1 ou 2, dans lequel le revêtement peut résister à une température de fonctionnement supérieure à 550 °F (environ 288 °C).

4. Ensemble palier à air selon la revendication 1 ou 2,
dans lequel le revêtement peut résister à une température de fonctionnement supérieure à 750 °F (environ 400 °C).

5. Ensemble palier à air selon une quelconque revendication précédente, dans lequel le revêtement a une épaisseur supérieure à environ 0,00004 pouce (1 micron).

6. Ensemble palier à air selon la revendication 5, dans lequel le revêtement a une épaisseur inférieure à 0,002 pouce (50 microns).

7. Ensemble palier à air selon une quelconque revendication précédente, dans lequel le revêtement est exempt de composés fluorés.

8. Ensemble palier à air selon une quelconque revendication précédente, comprenant en outre :
un second élément disposé sur un côté de la bride opposé au premier élément fixe, dans lequel le second élément a un revêtement sur une surface faisant face à la bride, le revêtement comprenant un revêtement auto-lubrifiant non polymère,

9. Palier à feuille (22) pour un ensemble palier à air (10), le palier à feuille comprenant :
une pluralité de feuilles convexes (40) agencées généralement autour d'un axe de rotation, le palier à feuille ayant un premier côté (42), un second côté opposé (44) et une ouverture (46) centrée à travers celui-ci ; et
un revêtement sur au moins une surface comportant au moins le premier côté (42) ou le second côté (44), le revêtement comprenant un revêtement auto-lubrifiant non polymère, ou une combinaison dudit revêtement auto-lubrifiant non polymère avec du carbure de tungstène, **caractérisé en ce que** le revêtement auto-lubrifiant comprend du carbone de type diamant (DLC).

10. Palier à feuille selon la revendication 9, dans lequel le revêtement peut résister à une température de fonctionnement supérieure à 550 °F (environ 288 °C).

11. Palier à feuille selon la revendication 9,
dans lequel le revêtement peut résister à une température de fonctionnement supérieure à 750 °F (environ 400 °C).

12. Palier à feuille selon la revendication 9, 10 ou 11, dans lequel le revêtement est exempt de composés fluorés.

13. Procédé de fabrication d'un palier à feuille (22) pour un ensemble palier à air (10), comprenant :
l'agencement d'une pluralité de feuilles convexes (40) généralement autour d'un axe de rotation pour former un palier à feuille, le palier à feuille (22) ayant un premier côté (42), un second côté opposé (44) et une ouverture (46) centrée à travers celui-ci, autour de l'axe de rotation ; et
l'application d'un revêtement comprenant un revêtement auto-lubrifiant non polymère, ou une combinaison dudit revêtement auto-lubrifiant non polymère et du carbure de tungstène sur au moins l'une de la première face et de la seconde face par l'un parmi la projection au plasma, le dépôt chimique en phase vapeur et le dépôt physique en phase vapeur, et **caractérisé en ce que** le revêtement auto-lubrifiant comprend du carbone de type diamant (DLC).

14. Procédé selon la revendication 13, dans lequel le revêtement a une épaisseur supérieure à environ 0,00004 pouce (1 micron) et une épaisseur inférieure à 0,002 pouce (50 microns).

15. Procédé selon la revendication 13 ou 14, dans lequel le revêtement est exempt de composés fluorés.
